# EUROPEAN PATENT APPLICATION

(11) **EP 4 116 680 A1**
(43) Date of publication of application: **11.01.2023**
(21) Application number: 22161290.6
(22) Date of filing: 10.03.2022
(51) Int. Cl.: G01F 23/72, G01F 23/68

(54) **FLOATER DETECTION DEVICE FOR MONITORING THE QUANTITY OF A LIQUID IN A CONTAINER**

(30) Priority: 05.07.2021 IT 202100017633
(71) Applicant: Mont.El Apparecchiature Elettroelettroniche S.r.l., 25057 Sale Marasino (BS) (IT)
(72) Inventor: TOSI, Diego, 46040 MONZAMBANO MN (IT); CHERUBINI, Alessandro, 25060 CELLATICA BS (IT)
(74) Representative: Modiano, Micaela Nadia

(57) **Abstract**

A detection device (1) for monitoring the quantity of a liquid in a container, comprising:
- a guiding element (2) which is extended along a longitudinal axis (Y), adapted to be arranged vertically in a container; the guiding element (2) comprises one or more electrical circuits which comprise a plurality of resistors;
- at least one sliding contact (4) which can slide along the guiding element (2) so as to vary the overall resistance of the one or more electrical circuits;
- a floater (3) which can slide along the longitudinal axis (Y) and is adapted to float in the liquid when it is present in the container;
the guiding element (2) and the at least one sliding contact (4) are contained within a hermetic shell (5) and the floater (3) is arranged outside the shell (5);
at least one sliding contact (4) is integral with one or more first magnets (41) and the floater (3) is integral with one or more second magnets (31) which interact magnetically with the first magnets (41) so that a movement of the floater (3) along the longitudinal axis (Y) induces a corresponding movement of the at least one sliding contact (4).

## Description

The present invention relates to a detection device for monitoring the quantity of a liquid in a container, for example the quantity of fuel present in a tank.

In greater detail, the present invention relates to a system for measuring the quantity of liquid in a container of the type commonly termed "floater", in which the quantity of the liquid is detected on the basis of the position of a floater which floats in said liquid.

Currently, in particular for measuring the quantity of liquid present in a fuel tank, floater devices with resistive variation and sliding contacts are commonly used.

In these systems of the known type, the detection device comprises a sliding floater, to which a sliding contact is fixed integrally, which slides along a supporting rod constituted essentially by a printed circuit provided with copper-coated tracks connected to resistances of different values. The sliding contacts are thus immersed in the liquid inside the container. The length of the rod plus any mechanical guiding elements must be suitable to cover all the tank of which one wishes to measure the quantity of liquid contained.

In some models, the delivery and return pipes are also inserted in the same flange used to fix the supporting rod to the tank, in order to make the fluid flow into, and from, said tank.

The floater obviously must have an appropriate density and mass to overcome the friction forces and float, rising when the level of the liquid rises and descending when the level lowers.

The sliding contacts, by moving along the rod, modify, based on the position in which they are located, the overall equivalent resistance that is measured across the upper ends of the rod between two terminals. This resistance value determines the level reached by the floater and therefore of the liquid contained in the container.

The resistance measurement is performed by a programmable electronic device (for example a microprocessor or similar device) that converts said value into the volumetric capacity of the container on the basis of its shape.

As an alternative, the sensor is connected directly to an analog reading instrument.

This type of device is widely used due to its low cost but has some known drawbacks, including the following:
- mechanical wear of the sliding contacts;
- value of the overall resistance that can be altered by the deposition, on the copper tracks or on the sliding contacts, of impurities present in the liquid of the tank, which in extreme cases can completely isolate the tracks on which the sliding contact slides, completely altering the resistive value;
- use possible only with certain types of liquids (typically nonconductive and non-corrosive ones);
- difficulty in providing a protection of the electronic board if it is designed to be immersed in particularly corrosive liquids.

There are also known floater detection devices, for monitoring the amount of a liquid in a fuel tank, which use reed-type bulbs or are based on an operating principle of the "active" type, for example via a series of Hall-effect sensors.

These systems solve the problems related to the sliding contact but are normally more expensive and also provide a discrete (stepwise) variation of the liquid level. Furthermore, devices of the active type are not compatible with the systems that currently use sliding contact detection devices.

The aim of the present invention is to provide a detection device for monitoring the quantity of a liquid in a container that is capable of solving the problems and overcoming the limitations of the background art described above.

Within this aim, an object of the present invention is to provide a detection device for monitoring the quantity of a liquid in a container capable of avoiding the problems of wear and false contacts.

Another object of the invention is to provide a detection device for monitoring the quantity of a liquid in a container that is more reliable than the background art.

Another object of the invention is to provide a detection device for monitoring the quantity of a liquid in a container that makes it possible to protect the electronic components better and more easily.

A further object of the invention is to provide a detection device for monitoring the quantity of a liquid in a container that can be used in all types of liquids or that is any case more versatile.

Another object of the invention is to provide a detection device for monitoring the quantity of a liquid in a container that is easy to provide and has low costs.

Not the least object of the invention is to provide a valid alternative to the background art.

This aim and these and other objects that will become more apparent hereinafter are achieved by a detection device for monitoring the quantity of a liquid in a container according to claim 1.

Further characteristics and advantages of the present invention will become more apparent from the description of a preferred but not exclusive embodiment of a detection device for monitoring the quantity of a liquid in a container, illustrated by way of non-limiting example with the aid of the accompanying drawings, wherein:

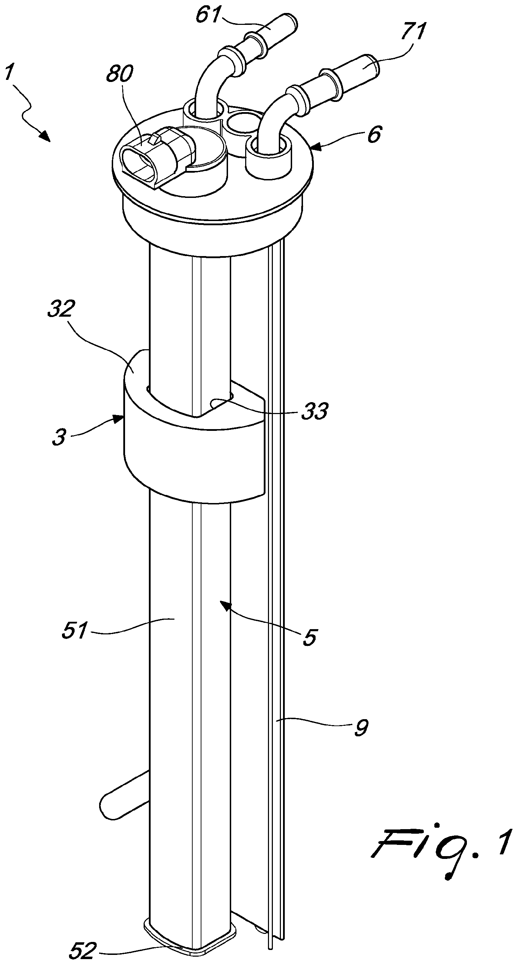

Figure 1 is a perspective view of a possible embodiment of the detection device according to the present invention;
Figure 2 is a partially sectional perspective view of the device of Figure 1;

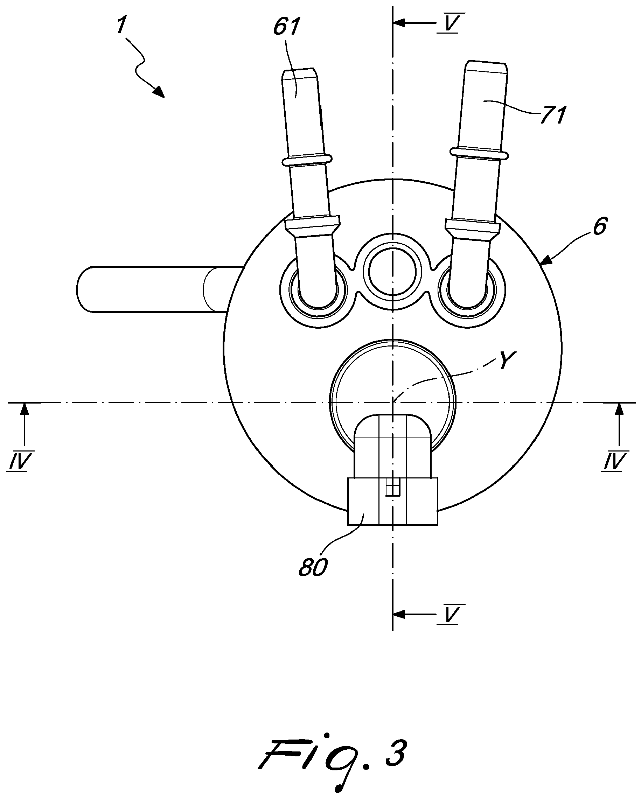

Figure 3 is a top plan view of the device of Figure 1;
Figure 4 is a sectional view, taken along the vertical plane IV-IV shown in Figure 3 of the device of Figure 1;

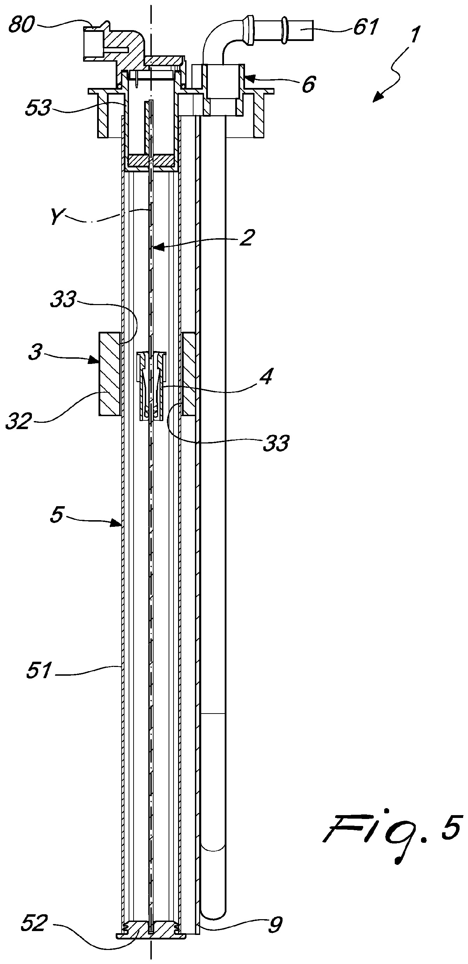

Figure 5 is a sectional view, taken along the vertical plane V-V shown in Figure 3 of the device of Figure 1.

With reference to the figures, the detection device, generally designated by the reference numeral 1, is used to monitor (i.e., to measure in a repeated and/or continuous manner) the quantity of a liquid in a container, so that a user can monitor the quantity of said liquid without having to access the container.

The container to which reference is made can be, by way of non-limiting example, a fuel tank of a vehicle; in this example the liquid is the fuel present in the tank.

The detection device 1 comprises a longitudinally extended guiding element 2 which is extended along a longitudinal axis Y, adapted (during operation, i.e., in a condition of use) to be arranged vertically in the container.

In the preferred embodiments, the guiding element 2 is substantially shaped like a bar or rod or other similar rectilinear element.

The guiding element 2 comprises, in a known manner, one or more electrical circuits which comprise a plurality of resistors, for example comprising a printed circuit provided with copper-coated tracks (or made of another conductive material), which are connected to resistances of different values as in the background art.

The detection device 1, similarly to sliding contact detection devices of the known type, comprises at least one sliding contact 4 which can slide along the guiding element 2 so as to vary the overall resistance of said one or more electric circuits and also a floater 3 which can slide along the longitudinal axis Y and is adapted to float in the liquid when it is present in the container.

Essentially, the sliding contacts 4 comprise elements made of electrically conductive material which make contact with tracks made of conductive materials which are present on the guiding element 2, closing the one or more electrical circuits. Since multiple resistors are distributed in the guiding element 2, along the longitudinal axis Y, the circuit will have different resistance values depending on the point where the sliding contacts close the circuit.

The elements made of conductive material are for example supported by a slider or other supporting element which allows their sliding along the guiding element 2.

In practice, in a known manner, the sliding contacts 4, by moving along the guiding element 2 modify, based on the position in which they are located, the overall equivalent resistance that is measured at the upper ends of the guiding element 2 (for example, between two terminals). This resistance value will determine the level reached by the floater 3 and therefore of the liquid contained in the container.

The resistance measurement can be performed by a programmable electronic device (for example, a microprocessor or microcontroller or other similar device) that converts said value into the volumetric capacity of the container according to its shape.

The detection device 1 can also be connected directly to an analog reading instrument, which will detect and display the resistance variation.

As an alternative, optionally, the detection device 1 can comprise an electronic control unit configured to identify the position of the floater 3 along the longitudinal axis Y on the basis of said overall resistance and therefore produce, as a function of said position, a signal that is indicative of the quantity of liquid that is present in the container.

Such signal indicative of the quantity of liquid can be a digital or analog signal of a known type, which can for example, in a known manner, be sent to, or displayed on, an analog or digital interface device (such as a display, a pointer-type indicator, etcetera) which renders the quantity of liquid that is present in the container readable by the user.

Conveniently, in order to allow the functional connection with the reading instrument or the interface device or with a programmable electronic device, the detection device 1 comprises a connector 80, which in the illustrated embodiment is present on the flange 6 that will be described hereinafter.

Preferably, the guiding element 2 comprises, or consists of, an electronic board which in turn comprises, in a known manner, one or more tracks (for example copper-coated tracks or other electrical tracks) which face the outside of the guiding element 2 and are adapted to be in contact with the one or more sliding contacts 4; the tracks are electrically connected to the electrical resistances so that the resistance of the circuit formed by them depends on the point in which they make contact with the sliding contact 4.

In some embodiments, this electronic board of the guiding element is extended along the longitudinal axis Y for 40-80 cm.

According to the invention, the guiding element 2 and the at least one sliding contact 4 are contained within a hermetic shell 5. The shell 5 is hermetic in the sense that it does not allow the passage of the liquid in which, in a condition of use, at least part of the device 1 is immersed.

Therefore, the shell 5 defines inside it a hermetic chamber which is hermetically sealed (in the sense that it is liquid-tight) in which the guiding element 2 is contained and in which the one or more sliding contacts 4 can slide.

Advantageously, the electronic control unit (when present) and all the other electronic components are also accommodated inside the hermetic shell 5.

In this manner, the sliding contacts 4, the electrical tracks, and generally all the circuits and the electrical and electronic components of the device 1 do not make contact with the liquid and are preserved from the chemical and physical actions thereof.

In greater detail, the shell 5 is extended longitudinally along the longitudinal axis Y and has substantially the shape of a tubular element having any cross-section (in the example shown, it has a substantially quadrangular cross-section, while in other embodiments it has a circular or oval or polygonal cross-section).

In even greater detail, in some embodiments, including the one shown, the hermetic shell 5 comprises an impermeable side wall 51 which surrounds the guiding element 2 and two closure elements which close hermetically the shell 5 at the two ends: a lower closure element 52, which is fixed hermetically to a first end of the side wall 51, and an upper closure element 53, which is fixed hermetically to a second end of the side wall 51.

According to the invention, the floater 3 is arranged outside the shell 5 and can therefore slide along said shell 5 (and more precisely along the side wall 51 thereof).

Therefore, the sliding contacts 4 are mechanically separate from the floater 3 (i.e., the sliding contacts 4 are not mechanically connected or coupled to the floater 3) since the shell (and more precisely the side wall 51 thereof) is interposed between the sliding contacts 4 and the floater 3.

According to the invention, the at least one sliding contact 4 is integral (i.e., fixed or mechanically coupled) with one or more first magnets 41.

The floater 3 is integral with one or more second magnets 31 which interact magnetically with the first magnets 41 so that a movement of the floater 3 along the longitudinal axis Y induces a corresponding movement (again along the same axis Y) of the at least one sliding contact 4.

The magnets 31, 41 are preferably natural magnets.

Essentially, the floater 3 and the sliding contacts 4 are functionally connected by means of the magnetic interaction between the first magnets 41 and the second 31 magnets, so that the floater 3, by moving along the longitudinal axis Y, entrains the sliding contacts 4 that are inside the hermetic shell 5.

Obviously, at least the side wall 51 of the shell 5 is made of a material that is permeable to the magnetic field so as not to compromise the magnetic interaction.

In some embodiments, at least one of the first magnets 41 is arranged with its north pole directed toward the south pole of a respective second magnet 31, or vice versa, so as to apply an attraction force to said respective second magnet 31 (and vice versa), so that the floater 3 entrains the sliding contact 4 by attraction.

As an alternative or in addition, at least one of the first magnets 41 is arranged with its north pole directed toward the north pole of a respective second magnet 31 so as to apply a repulsion force to said respective second magnet 31 (and vice versa), so that the floater 3 entrains the sliding contact 4 by repulsion.

It should be noted that in the example shown, the magnets 31, 41 are inclined with respect to the longitudinal axis Y.

The floater 3 is adapted to float in the liquid of which one must measure the level, when it is present in the container, i.e., the floater 3 is an element configured, in a known manner, so as to have such a shape, dimensions and relative density as to make it float in the liquid so that it rises and descends along the longitudinal axis Y (and therefore along the shell 5 which acts as a guide) according to the level of the liquid that is present in the container.

In the non-limiting example shown, the floater 3 has a substantially semi-cylindrical shape, but the shape and dimensions of said floater 3 can vary according to the requirements.

In the preferred embodiments, including the one shown, the floater 3 comprises a floating body 32 provided with a through slot 33 which is crossed by the hermetic shell 5.

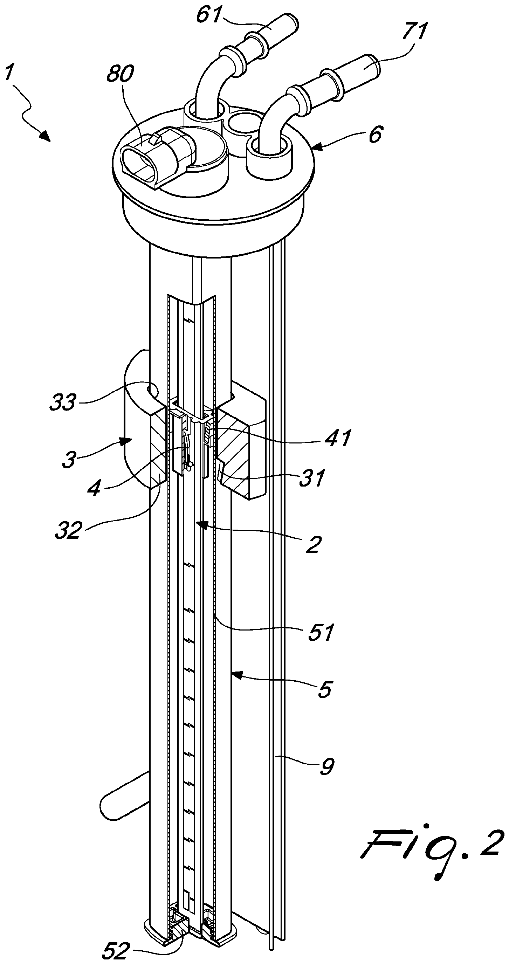

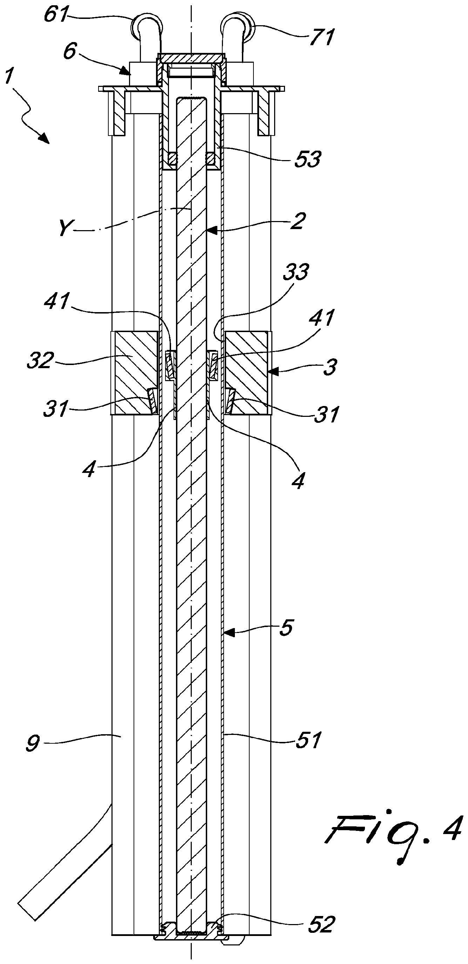

Preferably, as shown in Figures 2 and 4, at least one receptacle is formed in the through slot 33 and accommodates the at least one second magnet 31, so that it faces the side wall 51 of the shell 5.

In the particular embodiment shown, the detection device 1 comprises a closure flange 6 which is fixed to an upper end of the shell 5 (and therefore of the guiding element 2) and is configured to close the container, when the device 1 is in a condition of use in which the guiding element 2 is inserted in said container. In practice, said closure flange 6 acts as a cap for the container and at the same time holds the detection device 1 in an operating position.

This flange 6 can coincide, or be integral, with the upper closure element 53 (or the latter can be part of the flange 6).

Optionally, the closure flange 6 is crossed by a supply duct 61 and/or an intake duct 71 of the liquid, optionally provided with respective ends 61, 71 for connection to the hydraulic system that uses the liquid.

According to an optional and advantageous characteristic, the at least one sliding contact 4 and/or the guiding element 2 (particularly the surfaces affected by the sliding contact) are at least partially covered by a functionalizing fluid substance, such as a lubricant adapted to reduce friction and/or wear and/or a fluid adapted to increase electrical conductivity. By virtue of the fact that the components covered by the functionalizing fluid are isolated from the liquid present in the container, the contamination of said liquid and the removal of the fluid are avoided.

Optionally, the detection device 1 comprises a longitudinal protective wall 9 which is extended parallel to the shell 5 and can act as additional guide for the floater 3, said floater 3 sliding partially between the shell 5 and said protective wall 9.

In practice it has been found that the detection device for monitoring the quantity of a liquid in a container, according to the present invention, achieves the intended aim and objects, since it allows avoiding the problems of wear and false contacts due to the interaction of the liquid with the sliding contacts and the other electrical components.

Another advantage of the detection device according to the invention resides in the fact that it is more reliable and more precise in measurement than the background art.

A further advantage of the detection device according to the invention resides in the fact that it can ensure a better protection of the electrical/electronic components.

Another advantage of the detection device according to the invention resides in the fact that it can be used in all the types of liquids and therefore is more versatile.

Another advantage of the detection device according to the invention resides in the fact that it is easy to provide and with low costs.

Moreover, the detection device according to the invention is compatible with preexisting systems that use sliding contact detection devices of the known type and therefore can be used to replace these devices without the need for reconfigurations.

Moreover, the present invention provides a valid alternative to the background art.

The detection device for monitoring the quantity of a liquid in a container thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application No. 102021000017633 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A detection device (1) for monitoring the quantity of a liquid in a container, comprising:
- a guiding element (2) which is extended along a longitudinal axis (Y), adapted to be arranged vertically in a container, said guiding element (2) comprising one or more electrical circuits which comprise a plurality of resistors;
- at least one sliding contact (4) which can slide along the guiding element (2) so as to vary the overall resistance of said one or more electrical circuits;
- a floater (3) which can slide along said longitudinal axis (Y) and is adapted to float in the liquid when it is present in the container;
**characterized in that** said guiding element (2) and said at least one sliding contact (4) are contained within a hermetic shell (5),
and **in that** said floater (3) is arranged outside said shell (5);
wherein said at least one sliding contact (4) is integral with one or more first magnets (41),
and said floater (3) is integral with one or more second magnets (31) which interact magnetically with said first magnets (41) so that a movement of the floater (3) along the longitudinal axis (Y) induces a corresponding movement of the at least one sliding contact (4).

2. The detection device (1) according to claim 1, further comprising an electronic control unit configured to identify the position of the floater (3) along said longitudinal axis (Y) on the basis of said overall resistance and therefore produce, as a function of said position, a signal that is indicative of the quantity of liquid that is present in the container.

3. The detection device (1) according to claim 1 or 2, wherein:
at least one of said one or more first magnets (41) is arranged with its north pole directed toward the south pole of a respective second magnet (31), or vice versa, so as to apply an attraction force to said respective second magnet (31) and vice versa,
and/or
at least one of said one or more first magnets (41) is arranged with its north pole directed toward the north pole of a respective second magnet (31), so as to apply a repulsion force on said respective second magnet (31) and vice versa.

4. The detection device (1) according to one or more of the preceding claims, wherein said hermetic shell (5) comprises:
- an impermeable side wall (51) which surrounds said guiding element (2);
- a lower closure element (52) which is fixed hermetically to a first end of said side wall (51); and
- an upper closure element (53) which is fixed hermetically to a second end of said side wall (51).

5. The detection device (1) according to one or more of the preceding claims, wherein said guiding element (2) comprises an electronic board which comprises one or more tracks adapted to be in contact with said at least one or more sliding contacts (4) and electrically connected to electrical resistors.

6. The detection device (1) according to one or more of the preceding claims, wherein said floater (3) comprises a floating body (32) provided with a through slot (33) which is crossed by said shell (5).

7. The detection device (1) according to claim 6, wherein said through slot (33) comprises a receptacle which accommodates said at least one second magnet (31).

8. The detection device (1) according to one or more of the preceding claims, **characterized in that** it comprises a closure flange (6) which is fixed to an upper end of said shell (5) and is configured to close the container in a condition of use in which said shell (5), with the guiding element (2) and the floater (3), is inserted in said container.

9. The detection device (1) according to one or more of the preceding claims, wherein said at least one sliding contact (4) and/or said guiding element (2) are at least partially covered by a functionalizing fluid substance.

10. The detection device (1) according to claim 9, wherein said functionalizing fluid substance comprises a lubricant and/or a fluid adapted to increase electrical conductivity.
